Europäisches Patentamt

European Patent Office

Office européen des brevets

(19)

(11) Numéro de publication: **0 403 374**

**A1**

# (12) DEMANDE DE BREVET EUROPEEN

(21) Numéro de dépôt: **90401631.8**

(22) Date de dépôt: **13.06.90**

(51) Int. Cl.5: **B60M 1/18**

(30) Priorité: **14.06.89 FR 8907866**

(43) Date de publication de la demande:
**19.12.90 Bulletin 90/51**

(84) Etats contractants désignés:
**AT BE CH DE DK ES GB GR IT LI LU NL SE**

(71) Demandeur: **SPIE-BATIGNOLLES**
**10 Avenue de l'Entreprise**
**F-95863 Cergy Pontoise Cédex(FR)**

(72) Inventeur: **Morizot, Alain**
**10 Avenue de l'Entreprise**
**F-95863 Cergy Pontoise Cedex(FR)**
Inventeur: **Vuaillat, Philippe**
**10 Avenue de l'Entreprise**
**F-95863 Cergy Pontoise Cedex(FR)**
Inventeur: **Lacoste, Jean-Philippe**
**10 Avenue de l'Entreprise**
**F-95863 Cergy Pontoise Cedex(FR)**
Inventeur: **Poli, Jean**
**10 Avenue de l'Entreprise**
**F-95863 Cergy Pontoise Cedex(FR)**

(74) Mandataire: **Bouju, André**
**Cabinet Bouju 38 avenue de la Grande**
**Armée**
**F-75017 Paris(FR)**

(54) **Dispositif de sectionnement pour caténaire sous tunnel.**

(57) Le dispositif électrique de sectionnement pour caténaires s'étendant à la partie supérieure d'un tunnel ferroviaire, comprend un couteau (12) en métal bon conducteur de l'électricité et deux bornes de contact (13, 14) reliées électriquement à deux portions de ligne caténaire (7, 10).

Le couteau (12) est monté en rotation suivant un axe vertical immédiatement en dessous de la partie supérieure (5) de la paroi du tunnel, les deux bornes étant constituées par deux lames espacées (13, 14) en métal bon conducteur situées dans le plan du couteau (12), ce dernier étant mobile entre une position dans laquelle ses deux extrémités opposées sont en contact avec lesdites lames (13, 14) et une position située à 90° de la précédente.

Application au sectionnement des caténaires sous tunnel.

FIG. 3

## Dispositif de sectionnement pour caténaire sous tunnel

La présente invention concerne un dispositif de sectionnement pour caténaires s'étendant à la partie supérieure d'un tunnel ferroviaire.

Les sectionneurs pour caténaires sont des appareils conventionnels de coupure hors charge.

Ils sont utilisés sur les réseaux ferroviaires électrifiés essentiellement aux sectionnements électriques afin de diviser en plusieurs sections la ligne de contact à suspension caténaire et aux points d'alimentation. Ils sont constitués de deux supports isolants, dont les caractéristiques électriques dépendent de la tension d'alimentation, aux extrémités desquels sont fixées des plaques de cuivre, permettant la mise en place de liaisons électriques, constituant les bornes du sectionneur, et d'une lame de cuivre, généralement appelée "couteau", articulée sur l'un des supports isolants permettant de relier électriquement les deux bornes du sectionneur. Cette lame est généralement manoeuvrée par l'intermédiaire d'une barre rigide isolée articulée sur le couteau. La commande peut être manuelle ou motorisée.

Dans les tunnels ferroviaires, où généralement les volumes disponibles sont restreints, les équipements caténaires sont conçus afin de réduire l'espace nécessaire à leur mise en place.

Les sectionneurs standards posent des problèmes d'espace et la confection de niches spéciales, toujours onéreuses et parfois difficiles à réaliser techniquement, est nécessaire afin de mettre en place les sectionneurs caténaires.

Le but de la présente invention est de réaliser un dispositif de sectionnement pour caténaires qui puisse être fixé à l'intérieur d'un tunnel ferroviaire sans qu'il soit nécessaire de créer une niche ou cavité à l'intérieur de ce tunnel et n'engageant bien entendu pas le gabarit d'implantation des obstacles, ni celui des véhicules ferroviaires circulant dans le tunnel et respectant les distances d'isolement électriques.

L'invention vise ainsi un dispositif électrique de sectionnement pour caténaires s'étendant a la partie supérieure d'un tunnel ferroviaire, comprenant un couteau en métal bon conducteur de l'électricité et deux bornes de contact reliées électriquement à deux portions de ligne caténaire, ce couteau étant mobile sous l'action de moyens de commande entre une position de contact avec lesdites bornes et une position écartée de celles-ci.

Suivant l'invention, ce dispositif est caractérisé en ce que le couteau est monté en rotation suivant un axe vertical immédiatement en-dessous de la partie supérieure de la paroi du tunnel, les deux bornes étant constituées par deux lames espacées en métal bon conducteur situées dans le plan du couteau, ce dernier étant mobile entre une position dans laquelle ses deux extrémités opposées sont en contact avec lesdites lames et une position située a 90° de la précédente.

Du fait que le couteau du sectionneur soit monté suivant un axe vertical, juste en dessous de la partie supérieure de la paroi du tunnel, ce sectionneur présente un encombrement en hauteur très faible. Ainsi, ce sectionneur ne nécessite pas la réalisation d'une niche pour l'y incorporer, de sorte que sa mise en place dans un tunnel n'entraîne pas des coûts importants.

Selon une version avantageuse de l'invention, le dispositif comprend un support supérieur parallèle au couteau portant à ses extrémités opposées deux isolateurs s'étendant vers le bas, les lames constituant les bornes étant fixées respectivement à la partie inférieure de ces isolateurs.

Ces isolateurs présentent une dimension suffisante pour assurer l'isolation électrique par rapport aux bornes. Ceux-ci déterminent pour l'essentiel l'encombrement en hauteur du sectionneur qui peut être rendu très faible.

Selon une version préférée de l'invention, le couteau est monté en rotation au milieu du support supérieur et est séparé de ce dernier par deux isolateurs situés de part et d'autre de l'axe vertical de rotation du couteau.

De préférence également, la rotation du couteau est réalisée au moyen d'un actionneur s'étendant dans un plan parallèle au couteau sous le support supérieur.

Cet actionneur peut être un vérin hydraulique ou un système de commande par câbles. Dans tous les cas, cet actionneur du fait de sa disposition, n'affecte pas l'encombrement en hauteur du sectionneur.

D'autres particularités et avantages de l'invention apparaîtront encore dans la description ci-après.

Aux dessins annexés, donnés à titre d'exemples non limitatifs :

- la figure 1 est une vue en coupe transversale d'un tunnel ferroviaire comprenant un dispositif de sectionnement conforme à l'invention,

- la figure 2 est une vue du dispositif de sectionnement suivant la flèche F de la figure 1,

- la figure 3 est une vue de dessus du dispositif de sectionnement,

- la figure 4 est une vue de face à plus grande échelle du sectionneur,

- la figure 5 est une vue de dessus du sectionneur,

- la figure 6 est une vue en coupe transversale d'un tunnel comprenant une variante du dispositif de sectionnement conforme à l'invention,

- la figure 7 est une vue de dessus du dispositif de sectionnement selon la figure 6.

On notera tout d'abord que la caténaire est constituée de portions successives appelées "tirs" se recouvrant localement afin de permettre le passage du pantographe de la locomotive.

Dans ce recouvrement, les deux portions de caténaire sont situées à environ 200 mm de chaque côté du plan médian vertical du tunnel. Cette géométrie permet d'effectuer des sectionnements électriques en connectant les deux portions de caténaire par l'intermédiaire d'un sectionneur.

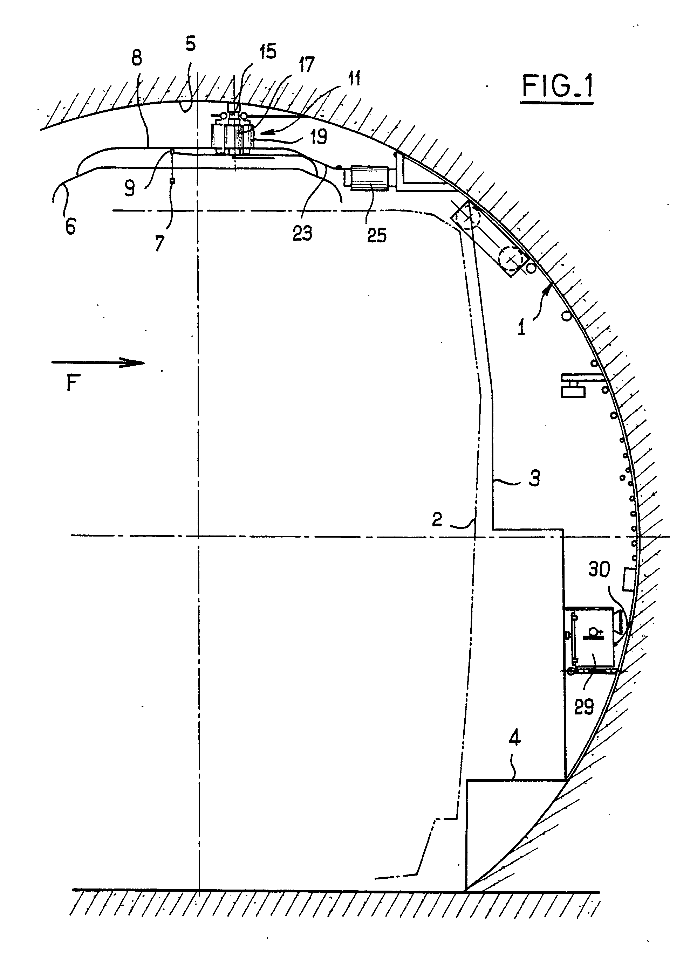

Dans la réalisation de la figure 1, on a représenté en coupe transversale un tunnel ferroviaire dont la paroi 1 présente une section sensiblement circulaire.

Sur cette figure, la ligne 2 en traits mixte représente le contour cinématique du véhicule ferroviaire circulant dans le tunnel. Cette ligne 2 est très proche de la ligne 3 qui définit le gabarit des structures installées sur la paroi 1 du tunnel.

A la partie inférieure du tunnel et sur chacun de ses côtés s'étend un trottoir 4.

Sous la partie supérieure 5 de la paroi du tunnel s'étend la caténaire 7 sur laquelle vient prendre appui le pantographe de la locomotive. Le gabarit de ce pantographe est désigné par la ligne 6.

Au dessus de cette ligne 6, s'étend une ligne 8 qui constitue le gabarit d'isolement de la partie sous tension.

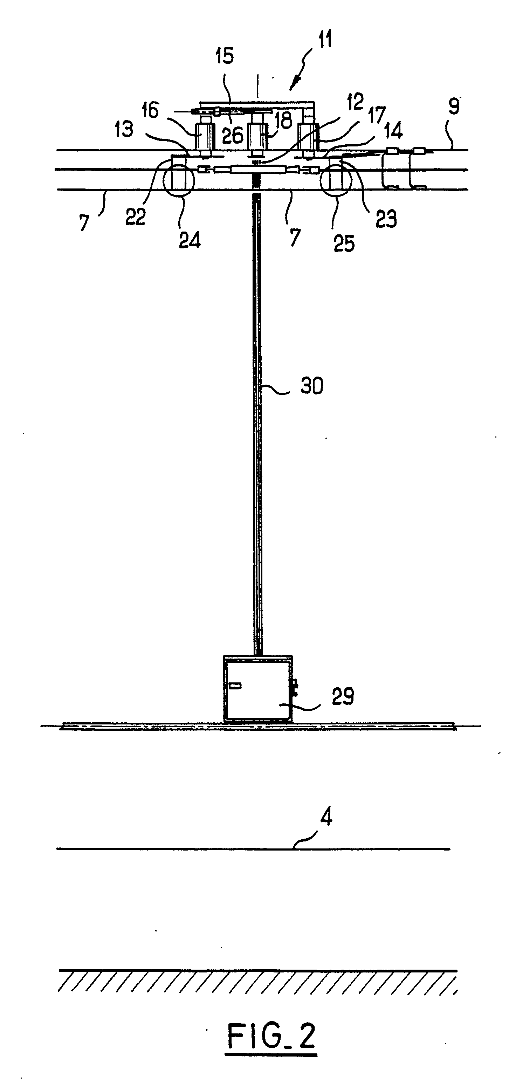

Sur la figure 2, on voit la portion de caténaire 7 suspendue de manière classique à un fil support 9.

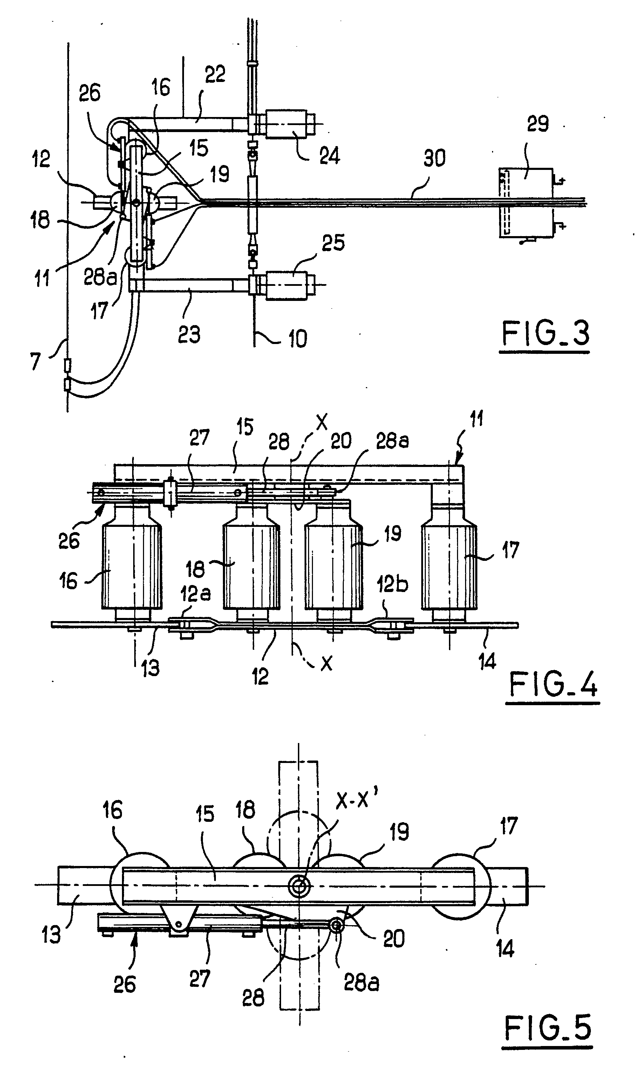

Sur la figure 3, on voit un fil conducteur 10 s'étendant parallèlement à la portion de caténaire 7 et constituant une seconde portion de caténaire. Entre ces deux portions de caténaire 7, 10 est dispose un sectionneur 11 destiné à les raccorder entre elles ou à les déconnecter.

Le sectionneur 11 qui s'étend à la partie supérieure 5 du tunnel, comprend un couteau 12 en métal bon conducteur de l'électricité tel que le cuivre et deux bornes de contact 13, 14 (voir notamment les figures 4 et 5) reliées électriquement aux deux portions de caténaire 7, 10.

Conformément à l'invention, le couteau 12 est monté en rotation suivant un axe vertical X-X' immédiatement en dessous de la partie supérieure 5 de la paroi du tunnel. Les deux bornes 13, 14 sont constituées par deux lames espacées 13, 14 en métal bon conducteur tel que le cuivre et situées dans le plan du couteau 12 (voir figure 4). Ce couteau 12 est mobile entre une position dans laquelle ses deux extrémités opposées 12a, 12b sont en contact avec les lames 13, 14 (voir figure 4) et une position située à 90° de la precédente (voir figures 3 et 5) dans laquelle aucun courant ne peut passer d'une portion de caténaire à l'autre.

Sur la figure 4, on voit en particulier que les extrémités opposées 12a, 12b du couteau 12 sont conformées en fourche, chaque fourche pinçant l'extrémité d'une lame 13, 14 dans la position de contact.

Par ailleurs, le sectionneur 11 comprend un support supérieur 10 en forme de barre, parallèle au couteau 12 et portant à ses extrémités opposées deux isolateurs 16, 17 s'étendant vers le bas.

Les lames 13, 14 constituant les bornes sont fixées respectivement à la partie inférieure des isolateurs 16, 17.

On voit également sur les figures 4 et 5 que le couteau 12 est monté en rotation suivant l'axe X-X' qui passe au milieu du support superieur 15.

Par ailleurs, le couteau 12 est séparé du support supérieur 15 par deux isolateurs 18, 19 identiques aux isolateurs 16 et 17 et situés de part et d'autre de l'axe vertical X-X' de rotation du couteau 12.

Les extrémités supérieures des isolateurs 18, 19 sont fixées à une plaque 20 qui est elle-même fixée au support supérieur 15 par un pivot 21 définissant l'axe X-X' de rotation de l'ensemble constitué par le couteau 12, les isolateurs 18, 19 et la plaque 20.

Comme indiqué sur les figures 3 et 5, les deux lames 13, 14 constituant les bornes sont situées dans le prolongement l'une de l'autre parallèlement au support supérieur 15.

Ces deux lames 13, 14 sont supportées (voir figure 3) par deux barres parallèles 22, 23, perpendiculaires au support 15 et s'étendant à une distance sensiblement constante de la partie supérieure 5 de la paroi du tunnel (voir également la figure 1). Les extrémités de ces barres 22, 23 opposées au sectionneur 11 sont fixées à des isolateurs 24, 25 eux-mêmes fixés à la paroi du tunnel.

Bien entendu, les barres 22, 23 ainsi que les isolateurs 24, 25 sont situés au-dessus de la ligne 6 de gabarit des obstacles.

La rotation du couteau 12 est réalisée au moyen d'un actionneur 26 s'étendant dans un plan parallèle au couteau 12 s'étendant légèrement sous le support supérieur 15.

Dans la réalisation représentée sur les figures 1 à 5, l'actionneur 26 est un vérin hydraulique dont le cylindre 27 est fixé de façon articulée au support supérieur 15 et dont la tige 28 a son extrémité 28a fixée de façon articulée à la plaque 20 à laquelle sont fixés les isolateurs 18, 19, cette plaque formant levier solidaire du couteau 12.

Dans la position représentée sur les figures 4 et 5, la tige 28 du vérin est complètement sortie et le couteau 12 est en contact avec les lames 13, 14. En faisant rentrer la tige 28, on amène le couteau 12 dans la position à 90° représentée en trait mixte sur la figure 5.

On voit d'autre part sur les figures 1 à 3, que le vérin hydraulique 26 est relié à une centrale hydraulique 29 de commande, par des conduites 30 fixées contre la paroi 1 du tunnel. Cette centrale hydraulique 29 est fixée à hauteur d'homme au-dessus du trottoir 4, ce qui facilite sa commande.

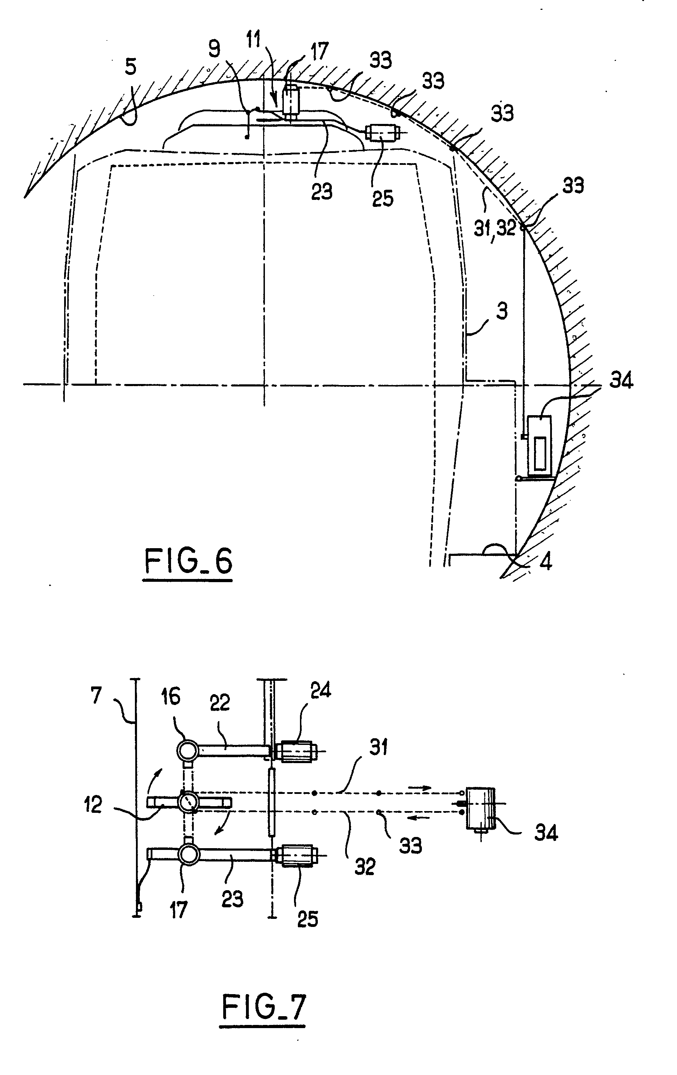

Dans la réalisation des figures 6 et 7, l'actionneur pour commander la rotation du couteau 12 est un système de commande par câbles dont les extrémités sont reliées d'une part à une plaque analogue à la plaque 20 formant levier solidaire du couteau 12 et séparée de ce dernier par les isolateurs 18, 19 et d'autre part à un moteur électrique 34 fixé à hauteur d'homme contre la paroi 1 du tunnel (voir figure 6). Les câbles 31, 32 sont guidés le long de la paroi 1 du tunnel par des poulies de renvoi 33, de sorte que ces câbles 31, 32 ne font pas saillie à l'extérieur du gabarit des obstacles 3.

Les principaux avantages techniques du dispositif de sectionnement que l'on vient de décrire sont les suivants.

Sa structure étant très compacte, le sectionneur peut être fixé dans l'espace très réduit compris entre la partie supérieure de la paroi du tunnel et les deux portions de caténaire.

Etant donné que le couteau 12 est monté pivotant dans un plan sensiblement horizontal, l'encombrement en hauteur du sectionneur est limité pratiquement à la hauteur des isolateurs 16, 17, 18, 19 qui peut être rendue aussi faible que possible.

Bien entendu, l'invention n'est pas limitée aux exemples de réalisation que l'on vient de décrire et on peut apporter à ceux-ci de nombreuses modifications sans sortir du cadre de l'invention.

Ainsi, le vérin hydraulique 26 et le système de commande par câbles 31, 32 et moteur électrique 34 peuvent être remplacés par d'autres moyens mécaniques ou électromécaniques.

**Revendications**

1. Dispositif électrique de sectionnement pour caténaires s'étendant à la partie supérieure (5) d'un tunnel ferroviaire, comprenant un couteau (12) en métal bon conducteur de l'électricité et deux bornes de contact (13, 14) reliées électriquement à deux portions de ligne caténaire (7, 10), ce couteau (12) étant mobile sous l'action de moyens de commande entre une position de contact avec lesdites bornes (13, 14) et une position écartée de celles-ci, caractérisé en ce que le couteau (12) est monté en rotation suivant un axe vertical (X-X´) immédiatement en dessous de la partie supérieure (5) de la paroi du tunnel, les deux bornes étant constituées par deux lames espacées (13, 14) en métal bon conducteur situées dans le plan du couteau (12), ce dernier étant mobile entre une position dans laquelle ses deux extrémités opposées sont en contact avec lesdites lames (13, 14) et une position située à 90° de la précédente.

2. Dispositif conforme à la revendication 1, caractérisé en ce qu'il comprend un support supérieur (15) parallèle au couteau (12), portant à ses extrémités opposées deux isolateurs (16, 17) s'étendant vers le bas, les lames (13, 14) constituant les bornes étant fixées respectivement à la partie inférieure des isolateurs (16, 17).

3. Dispositif conforme à la revendication 2, caractérisé en ce que le couteau (12) est monté en rotation au milieu du support supérieur (15).

4. Dispositif conforme à la revendication 3, caractérisé en ce que le couteau (12) est séparé du support supérieur (15) par deux isolateurs (18, 19) situés de part et d'autre de l'axe vertical (X-X´) de rotation du couteau (12).

5. Dispositif conforme à l'une des revendications 2 à 4, caractérisé en ce que les deux lames (13, 14) constituant les bornes sont situées dans le prolongement l'une de l'autre parallèlement au support supérieur (15).

6. Dispositif conforme à l'une des revendications 2 à 5, caractérisé en ce que la rotation du couteau (12) est réalisée au moyen d'un actionneur s'étendant dans un plan parallèle au couteau (12) sous le support supérieur (15).

7. Dispositif conforme à la revendication 6, caractérisé en ce que l'actionneur est un vérin hydraulique (26) dont le cylindre (27) est fixé de façon articulée au support supérieur (15) et dont la tige (28) a son extrémité fixée de façon articulée à une plaque (20) formant levier solidaire du couteau (12) et séparée de ce dernier par les isolateurs (18, 19).

8. Dispositif conforme à la revendication 7, caractérisé en ce que le vérin hydraulique (26) est relié à une centrale hydraulique de commande (29) par des conduites (30) fixées contre la paroi (1) du tunnel, cette centrale (29) étant fixée a hauteur d'homme contre cette paroi.

9. Dispositif conforme à la revendication 6, caractérisé en ce que l'actionneur est un système de commande par câbles (31, 32) dont les extrémités sont reliées à une plaque formant levier solidaire du couteau (12) et séparée de ce dernier par des isolateurs (18, 19).

10. Dispositif conforme à la revendication 9, caractérisé en ce que les câbles (31, 32) sont reliées à un moteur électrique (34) fixé à hauteur d'homme contre la paroi (1) du tunnel, les câbles (31, 32) étant guidés le long de la paroi du tunnel par des poulies (33).

FIG.1

## FIG. 2

_FIG_3_

_FIG_4_

_FIG_5_

FIG_6

FIG_7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-415961 (WILLIAM GEORGES HAMILTON) <br> * page 2, ligne 69 - page 3, ligne 5; figures 1-3 * | 1-6, 9 | B60M1/18 |
| A | | 10 | |
| X | DE-C-397538 (VEREIGNIGTE ISOLATORENWERKE) <br> * le document en entier * | 1 | |
| A | | 2-6, 9, 10 | |
| A | US-A-1962259 (CHARLES I. RITCHIE) <br> * page 1, lignes 1 - 45 * <br> * page 2, lignes 7 - 27; figure 1 * | 1, 2 | |

**DOMAINES TECHNIQUES RECHERCHES (Int. Cl.5 )**

B60M

Le présent rapport a été établi pour toutes les revendications

| Lieu de la recherche | Date d'achèvement de la recherche | Examinateur |
|---|---|---|
| LA HAYE | 07 AOUT 1990 | RIEUTORT A.S. |